Europäisches Patentamt

European Patent Office

Office européen des brevets

(19)

(11) Publication number: **0 250 183 B1**

(12) **EUROPEAN PATENT SPECIFICATION**

(45) Date of publication of patent specification: **22.09.93**  (51) Int. Cl.⁵: **C09D 5/03**, C09D 133/00, C09D 163/00, C09D 167/00

(21) Application number: **87305263.3**

(22) Date of filing: **12.06.87**

The file contains technical information submitted after the application was filed and not included in this specification

(54) **Coating powder.**

(30) Priority: **12.06.86 JP 136965/86**

(43) Date of publication of application:
**23.12.87 Bulletin  87/52**

(45) Publication of the grant of the patent:
**22.09.93 Bulletin  93/38**

(84) Designated Contracting States:
**DE FR GB**

(56) References cited:
**FR-A- 2 245 744**
**FR-A- 2 255 349**

(73) Proprietor: **Nippon Paint Co., Ltd.**
**2-1-2, Oyodokita Oyodo-ku**
**Osaka-shi Osaka-fu(JP)**

(72) Inventor: **Eguchi, Yoshio**
**1-10-2, Sumiyoshi**
**Ikeda-shi Osaka-fu(JP)**
Inventor: **Ishii, Keizou**
**1-19, Shimizu-cho**
**Ashiya-shi Hyogo-ken(JP)**
Inventor: **Miyazono, Tadafumi**
**1-2-10, Yanagawa-cho**
**Takatsuki-shi Osaka-fu(JP)**

(74) Representative: **Whalley, Kevin et al**
**MARKS & CLERK 57/60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

EP 0 250 183 B1

**Description**

The present invention relates to a coating powder and more specifically, it concerns a coating powder which is excellent in blocking resistance and capable of resulting a coating with improved weather resistance, hardness and other coating properties, as well as excellent appearance.

Coating powder containing no or substantially no volatile components have been widely used for the coating of metallic materials in an automobile, an electric appliance and other industries. However, the coating is, in general, not so good in appearance as compared with those of solvent type coating compositions. In order to improve the said coating appearance at least to the same level as obtained with a solvent type coating composition, it is believed that a higher degree of thermal flowability should be given to the coating powder by using, for example, a comparatively low molecular weight polymer or a low Tg polymer as a binder resin or by adding a plasticizer to the coating powder. In those cases, an additional problem is always encountered such that the coating powder is liable to become solid during storage thereof, resulting the so-called blocking, and in extreme case, thus solidified material can hardly be re-pulverized and used as a coating powder.

Thus, in a coating powder, the requirements of having improved appearance and improved blocking resistance are contrary to each other and actual use of such coating powder has been markedly limited on that account.

Attempts have been made to prevent or decrease the occurence of undesired blocking by the addition of inorganic microparticles such as colloidal silica, siloxane and the like with a coating powder. However, since an excess amount of such additive may cause the loss in gloss of the coating and often exert harmful influence on the film properties such as water resistance and the like, the employable amount of such additive is practically limited to at most 0.1% by weight of the total solid, which is quite insufficient for the intended blocking resistance.

FR-A-2245744 provides a coating powder, comprising a binder resin, an acrylate polymer powder, a hardener and other additives.

Under the circumstances, there has long been desired a coating powder which, without relying on inorganic microparticles, is free from blocking during storage, has an improved thermal flowability and capable of resulting a coating with excellent appearance which is comparable with those of conventional solvent type coating compositions.

The principal object of the invention is therefore to provide such coating powder. A further object of this invention is to provide a coating powder which can be applied in a thicker coating without the fear of sagging but still result a coating with improved weather resistance, hardness and other desirable properties, as well as excellent coating appearance and blocking resistance.

The present invention provides a coating powder consisting essentially of (a) a binder resin selected from the group consisting of acrylic resin, polyester resin and epoxy resin, which is solid at room temperature and is excellent in fluidity and film-forming properties in a molten state, (b) a hardener for the binder resin, (c) crosslinked polymer particles composed of polymer selected from the group consisting of acrylic resin, epoxy resin, polyester resin and melamine resin, which particles are insoluble in an organic solvent and cannot be fused at the baking temperature and whose mean grain diameter is in the range of 0.01 to 10$\mu$, the crosslinking degree being such that the thermal fluidity expressed in terms of flow distance is 0 to 5mm as determined by a test in which 1g of said polymer particles are pressed under 10t/cm$^2$ pressure to form a pellet with a diameter of 2cm, the thus formed pellet is fixed on a polished steel plate with double faced tape, the plate is held at an inclination of 45° and heated at 150°C for 15 minutes and the flow distance of said pellet on the plate surface is measured, and (d) other optional additives as pigments, levelling agent, UV absorber and anti-oxidant; the said crosslinked polymer particles (c) being 0.1 to 30% by weight of the total solid of said powder.

The present invention has been made on the basis of the finding that when the crosslinked polymer particles hereinunder mentioned are added as a constituting component of coating powder, the aforesaid objects of the invention can be fully attained therewith.

The crosslinked polymer particles used in the invention are three-dimensionally crosslinked. Any of the known polymer materials for coating use may be satisfactorily used, providing they are three-dimensionally crosslinked. The crosslinked acrylic resin particles may be prepared by emulsion-polymerizing a mixture of ethylenically unsaturated comonomers including at least one crosslinking comonomer in an aqueous medium by a conventional method, and then removing water from the emulsion by, for example, solvent substitution, centrifugation, filtering or drying. Any known emulsifier and/or dispersing agent may be used in the emulsion polymerization. An amphoteric ionizable group containing emulsifier is particularly preferable, since the crosslinked acrylic resin particles with a uniform particle size distribution may be easily obtained

2

therewith. Examples of ethylenically unsaturated comonomers used for the production of the crosslinked acrylic resin particles include methyl (meth) acrylate, ethyl (meth) acrylate, n-butyl (meth) acrylate, isobutyl (meth) acrylate, 2-ethyl hexyl (meth) acrylate, styrene, $\alpha$-methyl styrene, vinyl toluene, t-butyl styrene, ethylene, propylene, vinyl acetate, vinyl propionate, acrylonitrile, methacrylonitrile, dimethylaminoethyl (meth) acrylate and the like. Two or more comonomers may be combined. Crosslinking comonomers include a monomer having at least two ethylenically unsaturated bonds in the molecule and the combination of two different monomers having mutually reactive groups.

Monomers having at least two polymerization sites may typically be represented by esters of a polyhydric alcohol with an ethylenically unsaturated monocarboxylic acid, esters of an ethylenically unsaturated monoalcohol with a polycarboxylic acid and aromatic compounds having at least two vinyl substituents.

Specific examples thereof include ethylene glycol diacrylate, ethylene glycol dimethacrylate, triethylene glycol dimethacrylate, tetraethylene glycol dimethacrylate, 1,3-butylene glycol dimethacrylate, trimethylolpropane triacrylate, trimethylolpropane trimethacrylate, 1,4-butanediol diacrylate, neopentyl glycol diacrylate, 1,6-hexanediol diacrylate, pentaerythritol diacrylate, pentaerythritol triacrylate, pentaerythritol tetracrylate, pentaerythritol dimethacrylate, pentaerythritol trimethacrylate, pentaerythritol tetramethacrylate, glycerol diacrylate, glycerol allyloxy dimethacrylate, 1,1,1-tris (hydroxy methyl) ethane diacrylate, 1,1,1-tris (hydroxymethyl) ethane triacrylate, 1,1,1-tris (hydroxymethyl) ethane dimethacrylate, 1,1,1-tris (hydroxymethyl) ethane trimethacrylate, 1,1,1-tris (hydroxymethyl) propane diacrylate, 1,1,1-tris (hydroxymethyl) propane triacrylate, 1,1,1-tris (hydroxymethyl) propane dimethacrylate, 1,1,1-tris-(hydroxymethyl) propane trimethacrylate, triallyl cyanurate, triallyl isocyanurate, triallyl tirmellitate, diallyl phthalate, diallyl terephthalate and divinyl benzene.

Combinations of two monomers having mutually reactive groups may be used in place of, or in addition to monomers having two or more polymerization sites. For example, monomers having a glycidyl group such as glycidyl acrylate or methacrylate may be combined with carboxyl group-containing monomers such as acrylic, methacrylic or crotonic acid.

Also, hydroxyl group-containing monomers such as 2-hydroxyethyl (meth) acrylate, 2-hydroxypropyl (meth) acrylate, hydroxybutyl (meth) acrylate, allyl alcohol or methallyl alcohol may be combined with isocyanate group-containing monomers such as vinyl isocyanate or isopropenyl isocyanate. Other combinations will be apparent to those skilled in the art.

Monomer mixtures forming the crosslinked acrylic resin particles may contain monomers having a functional group which may react with the crosslinking agent.

Examples of such monomers include acrylic acid, methacrylic acid, 2-hydroxyethyl (meth) acrylate, 2-hydroxypropyl (meth) acrylate, hydroxybutyl (meth) acrylate, allyl alcohol, methallyl alcohol, acrylamide, methacrylamide and the like. The crosslinked acrylic resin particles may be of uniform structure or multilayer structure.

Crosslinked epoxy resin particles may be obtained by first preparing an epoxy resin in a conventional way as, for example, by a solution polymerization and the like, effecting a crosslinking reaction in the post emulsification step and removing an aqueous medium from the reaction system.

Since the preparation procedures per se are well known in the art, the details are omitted herein.

The base coating powder to which the aforesaid crosslinked polymer particles are added in this invention are conventional ones comprising (a) a binder resin, (b) a hardener and (d) other optional additives as pigments, levelling agent, UV absorber, anti-oxidant and the like. The binder resins should preferably have such reactive groups as glycidyl, carboxyl, hydroxyl group and the like or other groups capable of producing such groups at an elevated temperature.

As the hardener, any of the compounds or resins having two or more groups which are reactive with the aforesaid reactive groups of the binder resin may be satisfactorily used. Thus, the binder resin and the hardener are properly selected to react with each other at a fixing stage under heated conditions. Examples of such combinations are as follows.

When glycidyl group containing binder resin is used, the hardener is selected from a dicarboxyl acid, a diamine, a carboxyl group containing resin and the like; when using hydroxyl group containing binder resin, the hardener is selected from a melamine resin, a blocked polyisocyanate compound and the like; and when using carboxyl group containing binder resin, the hardener is selected from a polyglycidyl compound, a glycidyl group containing resin and the like.

It is, of course, possible to use more than one binder resins and/or hardeners as desired.

In this invention, the aforesaid crosslinked polymer particles are added to the base coating powder at an appropriate stage in the preparation of said powder.

For example, when the coating powder is prepared by a dry method wherein the solid binder resin, hardener and other additives are mixed and milled in a kneader to give pellets, which are then pulverized and sieved, the aforesaid crosslinked polymer particles may be added to the coating powder at any stage of said mixing and milling, pulverizing and shieving steps. When the coating powder is prepared by a wet process comprising dissolving or dispersing a solid binder resin, hardener, and other additives in an appropriate solvent and spray-drying the same, the aforesaid crosslinked polymer particles may be advantageously dispersed in said spray-drying solution or dispersion to obtain the present coating powder. At the time when a self-curing type binder resin is selected, the hardener may be dispensed with as might be well understood.

The most characteristic features of the invention reside in the point that a flowable resin and crosslinked polymer particles having no or substantially no fluidity at an elevated temperature are combined together, thereby attaining the objects of improved coating appearance and improved blocking resistance liable to occure with the use of said flowable resin in a coating composition. Thus, in the present invention, both of the conflicting natures of coating appearance and blocking resistance are well balanced by the combination of fluidity characteristics of said binder resin and of crosslinked polymer particles.

If the crosslinked polymer particles have no fluidity, the binder resin may be safely selected from a wider range of resins including ones having good fluidity, which have not been used in a coating powder area from the fear of undesirable sagging. There is of course a certain degree of allowable range in the fluidity of crosslinked polymer particles from the standview of blocking resistance of coating powder capable of resulting a coating with excellent apperance.

With respect to said fluidity nature of crosslinked polymer particles, the inventors have found that the polymer particles should preferably have the characteristics of 0 to 5 mm flow in the abovementioned thermal fluidity test.

The crosslinked polymer particles must have a mean grain diameter of 0.01 to 10 $\mu$. This is because if the mean grain diameter of said polymer particles exceeds over the limit of 10 $\mu$, there is a tendency of chemical seeding in a coating, and if the mean grain diameter is less than 0.01 $\mu$, it is unable to expect the aforesaid effects of the invention.

The crosslinked polymer particles should be added to the base coating powder in an amount of 0.1 to 30 % by weight, preferably 0.1 to 10 % and most preferably 0.1 to 5 % by weight, of the total solid. This is because if the amount of said polymer particles is less than 0.1 % by weight, there is no substantial effect in the improvement of blocking resistance, whereas if the amount of said polymer particles exceeds over the limit of 30 % by weight, there is a tendency that coating appearance be lowered.

From the standview of coating appearance alone, the most preferable range of said polymer particles is in a range of 0.1 to 5 % by weight of the total solid.

The invention shall be now more fully explained in the following Examples. Unless otherwise being stated, all parts and % are by weight.

Reference Example 1

Preparation of amphoteric ionizable group containing polyester resin

Into a 2 liters flask fitted with a stirrer, a nitrogen gas inlet, a thermoregulator, a condenser and a decanter, were placed 134 parts of bishydroxy ethyl taurine, 130 parts of neopentyl glycol, 236 parts of azelaic acid, 186 parts of phthalic anhydride and 27 parts of xylene and the mixture was heated, while removing the formed water azeotropically with xylene.

The temperature was raised to 190°C in about 2 hours from the commencement of reflux, and the reaction was continued, while stirring and continuing dehydration, until the resinous acid value based on carboxyl groups reached 145. The reaction mixture was then allowed to cool to 140°C, dropwise added with 314 parts of Cardura E-10® (versatic acid glycidyl ester, trademark of Shell Co.) in 30 minutes at 140°C and the combined mixture was reacted at the same temperature for 2 hours to obtain an amphoteric ionizable group containing polyester resin, whose acid value was 59 and hydroxyl value was 90. Number average molecular weight of the polyester resin was 1054.

Reference Example 2

Preparation of crosslinked polymer particles (G-1)

Into a 1 liter flask fitted with a stirrer, a condenser and a thermoregulator, were placed 282 parts of deionized water, 10 parts of the amphoteric ionizable group containing polyester resin obtained in Reference Example 1 and 0.75 part of dimethyl ethanol amine and the mixture was heated under stirring to 80 °C to get a clear solution. To this, a solution of 4.5 parts of azobiscyanovaleric acid in a mixture of 45 parts of deionized water and 4.3 parts of dimethyl ethanol amine was added and then a monomer mixture of 70.7 parts of methyl methacrylate, 94.2 parts of n-butyl acrylate, 70.7 parts of styrene, 30 parts of 2-hydroxyethyl acrylate and 4.5 parts of ethylene glycol dimethacrylate was dropwise added in 60 minutes. Thereafter, a solution of 1.5 parts of azobiscyanovaleric acid in 15 parts of deionized water and 1.4 parts of dimethyl ethanol amine was added and the combined mixture was reacted at 80°C for 60 mintues to obtain an emulsion having a non-volatile content of 45 %, pH 7.2 and a viscosity of 92 cps (at 25°C). This emulsion was subjected to a spray-drying to obtain crosslinked polymer particles (G-1) having a mean grain diameter of 0.8 $\mu$.

Ther thermal fluidity test was carried out according to the procedures as stated hereinbefore, and the flow distance (hereinafter merely referred as fluidity) was determined as 1 mm.

A part of said emulsion was added with xylene, and the mixture was heated under reduced pressure while removing water azeotropically with xylene to obtain a xylene dispersion (S-1) of crosslinked polymer particles.

Reference Example 3

Preparation of crosslinked polymer particles (G-2)

Into a flask fitted with a stirrer and a thermometer, were placed 200 parts of deionized water, 6 parts of sodium dodecyl benzene sulfonate and 8 parts of polyethylene glycol (molecular weight 4000). To this solution, 60 parts (on solid basis) of butyrated melamine formaldehyde resin were added and dispersed therein so as to give an emulsion having a mean particle size of 0.2 $\mu$. Thus obtained emulsion was adjusted to pH 3.8 with 0.5 N-HCl aqueous solution, gradually heated to 80°C and maintained at this temperature for 6 hours to obtain a dispersion of crosslinked polymer particles.

The dispersion was then subjected to spray-drying to obtain the crosslinked polymer particles (G-2), whose fluidity was 1 mm.

Reference Example 4

Preparation of crosslinked polymer particles (G-3)

Into a reaction vessel fitted with a stirrer and a thermometer, were placed 60 parts (on solid basis) of Epicoat 1001® (epoxy resin, manufactured by Shell Chem. Co.) and 4 parts of dicyandiamide and the mixture was heated at 150°C for 2 hours.

At the stage wherein no fluid mass was observed, the content was allowed to cool, pulverized and shieved to obtain crosslinked polymer particles (G-3) having a mean grain diameter of 2 $\mu$. The fluidity was 0 mm in substance.

Reference Example 5

Preparation of crosslinked polymer particles (G-4)

Into a flask fitted with a stirrer and a thermometer, were placed 200 parts of deionized water, 6 parts of sodium dodecyl benzene sulfonate and 4 parts of polyvinyl alcohol. To this, 70 parts of long oil alkyd (prepared by a conventional method from 90 parts of soy bean oil, 28 parts of phthalic anhydride, 17 parts of pentol and 1 part of maleic anhydride) and 2 parts of cobalt naphthenate were added and the mixture was emulsified. The mixture was heated, while introducing air, at 80°C for 8 hours to obtain a dispersion of crosslinked polymer particles. The dispersion was then subjected to spray-drying to obtain the crosslinked polymer particles (G-4), whose fluidity was 4.5 mm.

Reference Example 6

Preparation of acrylic resin [I]

Into a flask fitted with a dropping funnel, a stirrer and a thermometer, were placed 80 parts of xylene and the temperature was raised to 130°C. To this, a solution of 30 parts of glycidyl methacrylate, 10 parts of methyl methacrylate, 30 parts of styrene, 20 parts of n-butyl methacrylate, 10 parts of n-butyl methacrylate and 2 parts of azobisisobutyronitrile was dropwise added at a constant speed in 3 hours.

After completion of said addition, the combined mixture was maintained at the same temperature for 30 mintues, added dropwise a solution of 0.5 part of t-butyl peroxy benzoate in 20 parts of xylene in 1 hour. Thereafter, the mixture was maintained at 130°C for 2 hours and xylene was removed by a vacuum distillation to obtain an acrylic resin [I].

Reference Example 7

Preparation of acrylic resin solution [II]

Into a flask fitted with a dropping funnel, a stirrer and a thermometer, were placed 80 parts of xylene and the temperature was raised to 130°C. To this, a solution of 20 parts of N-n-butoxymethyl acrylamide, 10 parts of 2-hydroxyethyl metahcrylate, 20 parts of methyl methacrylate, 30 parts of styrene, 10 parts of n-butyl methacrylate, 10 parts of n-butyl acrylate and 2 parts of azobisisobutyronitrile was dropwise added from the dropping funnel at a constant speed in 3 hours. After completion of said addition, the mixture was maintained at the same temperature for 30 minutes and then added dropwise with a solution of 0.5 part of t-butyl peroxybenzoate in 20 parts of xylene in 1 hour. Thereafter, the combined mixture was maintained at 130°C for 2 hours to obtain an acrylic resin xylene solution [II].

Reference Example 8

To a flask as used in Reference Example 2, were placed 232 parts of deionized water, 10 parts of the polyester resin obtained in Reference Example 1, and 0.75 part of dimethyl ethanolamine. The mixture was stirred at 80°C to make a solution. To the solution, were added a solution of 10 parts of azobiscyanovaleric acid and 0.26 part of dimethyl ethanolamine in 20 parts of deionized water. Then, a monomer mixture consisting of 108 parts of methyl methacrylate and 27 parts of ethylene glycol dimethacrylate was added dropwise over 60 minutes. The mixture was stirred for additional 60 minutes at 80°C.

A solution of 0.5 part of azobiscyanovaleric acid and 0.3 part of dimethyl ethanolamine in 25 parts of water was added again to the reaction mixture. Then, a monomer mixture consisting of 9.5 parts of styrene, 20 parts of methyl methacrylate, 14 parts of n-butyl acrylate and 6 parts of ethylene glycol dimethacrylate was added dropwise over 60 minutes. A solution of 1.5 parts of azobiscyanovaleric acid and 1.4 parts of dimethyl ethanolamine in 15 parts of deionized water was added and the mixture was stirred for 60 minutes at 80°C. An emulsion having a non-volatile content of 45 %, a pH of 7.2 and a viscosity of 105 cps (25°C) was obtained.

Upon subjecting to a spray-drying, the crosslinked acrylic resin particles (G-5) having a mean diameter of 1.0 μ were obtained.

Example 1

100 parts of the acrylic resin [I] obtained in Reference Example 6, 24 parts of decane dicarboxylic acid, 30 parts of titanium oxide and 1 part of Modaflow® (levelling agent, trademark of Monsanto Chem.), were dry-mixed in a Henschel mixer (manufactured by Mitsui Miike Seisakusho). Next, the mixture was melt-kneaded in Co-kneader PR-46 (manufactured by Bus in Switzerland) at 100°C and then allowed to cool.

The solid mass was pulverized in a hammer mill and shieved with a 150 mesh wire screen.

To thus obtained powder, 5 parts of the crosslinked polymer particles (G-1) obtained in Reference Example 2 were added and mixed well to obtain a coating powder (A).

Example 2

The same procedures as stated in Example 1 were repeated excepting reducing the amount of crosslinked polymer particles (G-1) to 0.2 part, to obtain a coating powder (B).

6

Example 3

The same procedures as stated in Example 1 were repeated excepting increasing the amount of crosslinked polymer particles (G-1) to 20 parts, to obtain a coating powder (C).

Comparative Example 1

The same procedures as stated in Example 1 were repeated and however, the crosslinked polymer particles (G-1) were not added. Thus obtained powder was referred to as coating powder (D) hereinunder.

Comparative Example 2

The same procedures as stated in Example 1 were repeated excepting increasing the amount of crosslinked polymer particles (G-1) to 35 parts to obtain a coating powder (E).

Example 4

In a Henschel mixer (manufactured by Mitsui Miike Seisakusho), 100 parts of the acrylic resin [I] obtained in Reference Example 6, 24 parts of decane dicarboxylic acid, 30 parts of titanium oxide, 1 part of Modaflow and 10 parts of the crosslinked polymer particles (G-1) were mixed well and the mixture was then melt-kneaded in a Co-Kneader PR-46 (manufactured by Bus in Switzerland) at 100°C. Thereafter, the mixture was allowed to cool and the solid mass was then pulverized in a hammer mill, and shieved with a 150 mesh wire screen to obtain a coating powder (F).

Example 5

In a Henschel mixer, 100 parts of Krelan U-502® (polyester resin, trademark of Bayer A.G.), 36 parts of Kakenate PW 4403 N® (blocked isocyanate, trademark of Takeda Yakuhin K.K.), 40 parts of titanium oxide and 1 part of Acronal 4F® (levelling agent, trademark of BASF) were dry-mixed and the mixture was then melt-kneaded in a Co-kneader PR-46 at 100°C. After cooling, the solidified mass was pulverized in a hammer mill and shieved with a 150 mesh wire screen. To thus obtained powder, 3 parts of the crosslinked polymer particles (G-2) obtained in Reference Example 3 were mixed well to obtain a coating powder (G).

Comparative Example 3

The same procedures as stated in Example 5 were repeated and however, the crosslinked polymer particles were not added, to obtain a coating powder (H).

Example 6

The same procedures as stated in Example 4 were repeated excepting substituting the following for the materials shown in Example 4. 100 parts of Epicoat 1001® (epoxy resin, trademark of Shell), 6 parts of dicyandiamide, 40 parts of titanium oxide, 1 part of Modaflow® and 10 parts of crosslinked polymer particles (G-3) obtained in Reference Example 4. The powder thus obtained was referred to as coating powder (I) hereinunder.

Comparative Example 4

The same procedures as stated in Example 6 were repeated and however, the crosslinked polymer particles (G-3) were not used, to obtain a coating powder (J).

Example 7

In a paint shaker, 40 parts of titanium oxide were dispersed in the acrylic resin xylene solution [II] obtained in Reference Example 7 (100 parts as solid). Then, Modaflow® (1 part) and xylene dispersion (S-1) of crosslinked polymer particles (5 parts as solid) were added to obtain a coating composition. This was then subjected to spray-drying to obtain a coating powder (K).

Example 8

The same procedures as stated in Example 6 were repeated excepting substituting the crosslinked polymer particles (G-4) for the crosslinked polymer particles (G-3). Thus obtained coating powder was referred to (L) hereinunder.

Example 9

The same procedures as stated in Example 6 were repeated excepting substituting the crosslinked polymer particles (G-5) for the crosslinked polymer particles (G-3). Thus obtained coating powder was referred to as M hereinunder.

Thus obtained coating powders A to M were evaluated as follows.

1) Blocking resistance test: The test powder was storred at 40°C for 1 month and thereafter, the flow property of the coating powder was evaluated.

    excellent ...      no substantial change in flow property
    good ...           certain re-pulverizable masses
    no good ...        many un-pulverizable masses

2) Coating appearance and properties:

The test powder was applied on to a soft steel plate previously treated with a zinc phosphate bath, to a film thickness of 30 to 40$\mu$ by an electrostatic coating and the coating was baked at 180°C for 20 minutes.

The coating appearance was visually evaluated.

Pencil hardness test was carried out according to the standard JIS method.

Weather resistance test was conducted by using Sunshine weather-O-meter (400 hours illumination).

The test results are shown in the following Table 1.

Table 1

| Coating powder | blocking resistance | coating appearance | pencil hardness | weather resistance |
|---|---|---|---|---|
| A | excellent | excellent | 2H | excellent |
| B | good | excellent | H | excellent |
| C | excellent | good | 2H | excellent |
| D (Comp.Ex.1) | no good | excellent | B | good |
| E (Comp.Ex.2) | excellent | no good | 2H | good |
| F | excellent | excellent | 2H | excellent |
| G | excellent | excellent | 2H | excellent |
| M | excellent | excellent | 2H | excellent |
| H (Comp.Ex.3) | no good | excellent | F | no good |
| I | good | excellent | 3H | — |
| J (Comp.Ex.4) | no good | excellent | 2H | — |
| K | excellent | excellent | 2H | excellent |
| L | good | excellent | 2H | — |

9

**Claims**

1. Coating powder consisting essentially of
(a) a binder resin selected from the group consisting of acrylic resin, polyester resin and epoxy resin, which is solid at room temperature and is excellent in fluidity and film-forming properties in a molten state,
(b) a hardener for the binder resin,
(c) crosslinked polymer particles composed of polymer selected from the group consisting of acrylic resin, epoxy resin, polyester resin and melamine resin, which particles are insoluble in an organic solvent and cannot be fused at the baking temperature and whose mean grain diameter is in the range of 0.01 to 10$\mu$, the crosslinking degree being such that the thermal fluidity expressed in terms of flow distance is 0 to 5mm as determined by a test in which 1g of said polymer particles are pressed under 10t/cm$^2$ pressure to form a pellet with a diameter of 2cm, the thus formed pellet is fixed on a polished steel plate with double faced tape, the plate is held at an inclination of 45° and heated at 150°C for 15 minutes and the flow distance of said pellet on the plate surface is measured, and
(d) other optional additives as pigments, leveling agent, UV absorber and anti-oxidant,
the said crosslinked polymer particles (c) being 0.1 to 30% by weight of the total solid of said powder.

2. The powder according to claim 1, wherein the acrylic resin particles are obtained by an emulsion polymerization of $\alpha\beta$-ethylenically unsaturated monomer(s) and crosslinking monomer with the help of emulsifier.

3. The powder according to claim 2, wherein the emulsifier is a compound containing an amphoteric ionizable group.

4. The powder according to any of claims 1 to 3, wherein the amount of said crosslinked polymer particles is 0.1 to 10 % by weight of the total solid of said powder.

5. The powder according to claim 4, wherein the amount of said crosslinked polymer particles is 0.1 to 5% by weight of the total solid of said powder.

6. The powder according to any of claims 1 to 5, wherein the binder resin is a glycidyl group containing acrylic resin and the hardener is a dicarboxylic acid.

7. The powder according to any of claims 1 to 5, wherein the binder resin is a hydroxyl group containing polyester resin and the hardener is a blocked polyisocyanate compound.

8. The powder according to any of claims 1 to 5, wherein the binder resin is a glycidyl group containing acrylic resin and the hardener is a carboxyl group containing polyester resin.

9. The powder according to any of claims 1 to 5, wherein the binder resin is a carboxyl group containing polyester resin and the hardener is an epoxy resin.

10. The powder according to any of claims 1 to 5, wherein the binder resin is an epoxy resin and the hardener is a dicyandiamide.

11. The powder according to any of claims 1 to 5, wherein the binder resin is a carboxyl group containing polyester resin and the hardener is a triglycidyl isocyanurate.

12. The powder according to any of claims 1 to 5, wherein the binder resin is glycidyl group containing acrylic resin and the hardener is a combination of carboxyl group containing polyester resin and blocked polyisocyanate.

**Patentansprüche**

1. Lackpulver, das im wesentlichen besteht aus:

(a) ein Binderharz, das aus der Gruppe ausgewählt wird, bestehend aus Acrylharz, Polyesterharz und Epoxyharz, das bei Raumtemperatur fest ist und im schmelzflüssigen Zustand hervorragende Fluidität und filmbildende Eigenschaften aufweist,

(b) einen Härter für das Binderharz,

(c) vernetzte Polymerteilchen, die sich aus Polymer zusammensetzen, das aus der Gruppe ausgewählt wird, bestehend aus Acrylharz, Epoxyharz, Polyesterharz und Melaminharz, wobei die Teilchen in einem organischen Lösungsmittel unlöslich sind und bei der Ausheiztemperatur nicht schmelzen können und deren mittlerer Korndurchmesser im Bereich von 0,01 bis 10 $\mu$m liegt, ein solcher Vernetzungsgrad besteht, daß die als Fließstrecke ausgedrückte thermische Fluidität 0 bis 5 mm beträgt, welche Fluidität durch einen Test bestimmt wird, bei dem 1 g der Polymerteilchen unter einem Druck von 10 t/cm$^2$ zur Bildung eines Pellets mit einem Durchmesser von 2 cm gepreßt werden und das so gebildete Pellet auf einer polierten Stahlplatte mit einem zweiseitigen Klebeband befestigt wird, die Platte unter einer Neigung von 45° gehalten und 15 Minuten lang auf 150 °C erhitzt wird und die Fließstrecke des Pellets auf der Plattenoberfläche gemessen wird, und

(d) weitere wahlweise Zusätze, wie beispielsweise Pigmente, Verlaufmittel, UV-Absorptionsmittel und Antioxidantien; wobei die Menge der vernetzten Polymerteilchen (c) 0,1 bis 30 Gew.-% der gesamten Feststoffmenge des Pulvers beträgt.

2. Pulver nach Anspruch 1, bei welchem die Acrylharzteilchen durch eine Emulsionspolymerisation von $\alpha,\beta$-ethylenisch ungesättigtem(n) Monomer(en) und vernetzendem Monomer mit Hilfe eines Emulgiermittels erhalten werden.

3. Pulver nach Anspruch 2, bei welchem das Emulgiermittel eine Verbindung ist, die eine amphotere, ionisierbare Gruppe ausweist.

4. Pulver nach einem der Ansprüche 1 bis 3, bei welchem die Menge der vernetzten Polymerteilchen 0,1 bis 10 Gew.-% der gesamten Feststoffmenge des Pulvers beträgt.

5. Pulver nach Anspruch 4, bei welchem die Menge der vernetzten Polymerteilchen 0,1 bis 5 Gew.-% der gesamten Feststoffmenge des Pulvers beträgt.

6. Pulver nach einem der Ansprüche 1 bis 5, bei welchem das Binderharz ein Acrylharz mit einer Glycidylgruppe und der Härter eine Dicarbonsäure sind.

7. Pulver nach einem der Ansprüche 1 bis 5, bei welchem das Binderharz ein Polyesterharz mit einer Hydroxylgruppe und der Härter eine geblockte Polyisocyanatverbindung sind.

8. Pulver nach einem der Ansprüche 1 bis 5, bei welchem das Binderharz ein Acrylharz mit einer Glycidylgruppe und der Härter ein Polyesterharz mit einer Carboxylgruppe sind.

9. Pulver nach einem der Ansprüche 1 bis 5, bei welchem das Binderharz ein Polyesterharz mit einer Carboxylgruppe und der Härter ein Epoxyharz sind.

10. Pulver nach einem der Ansprüche 1 bis 5, bei welchem das Binderharz ein Epoxyharz und der Härter ein Dicyandiamid sind.

11. Pulver nach einem der Ansprüche 1 bis 5, bei welchem das Binderharz ein Polyesterharz mit einer Carboxylgruppe und der Härter ein Triglycidylisocyanurat sind.

12. Pulver nach einem der Ansprüche 1 bis 5, bei welchem das Binderharz ein Acrylharz mit einer Glycidylgruppe und der Härter eine Mischung von Polyesterharz mit Carboxylgruppe und geblocktem Polyisocyanat sind.

**Revendications**

1. Poudre de revêtement essentiellement constituée par:

(a) une résine liant choisie dans le groupe constitué par les résines acryliques, les résines polyesters et les résines époxy, laquelle est solide à la température ordinaire et présente d'excellentes propriétés de fluidité et filmogènes à l'état fondu;

(b) un durcisseur pour la résine liant;

(c) des particules de polymère réticulé composé d'un polymère choisi dans le groupe constitué par les résines acryliques, les résines époxy, les résines polyesters et les résines de mélamine, lesquelles particules sont insolubles dans un solvant organique et ne peuvent pas être fondues à la température de cuisson et dont le diamètre granulaire moyen se situe dans la plage de 0.01 à 10 $\mu$, le degré de réticulation étant tel que la fluidité thermique exprimée en termes de distance de coulée est de 0 à 5 mm lorsqu'elle est déterminée par un test dans lequel 1 g desdites particules de polymère est comprimé sous une pression de 10 t/cm$^2$ pour former une pastille de 2 cm de diamètre, la pastille ainsi formée est fixée sur une plaque d'acier poli avec un ruban adhésif double face, la plaque est maintenue à une inclinaison de 45° et chauffée à 150°C pendant 15 minutes et la distance sur laquelle coule ladite pastille sur la surface de la plaque est mesurée et

(d) d'autres additifs facultatifs comme des pigments, un agent nivelant, un agent d'absorption du rayonnement ultra-violet et un anti-oxydant, lesdites particules de polymère réticulé (c) représentent de 0.1 à 30% en poids du poids total de ladite poudre.

2. Poudre selon la revendication 1, dans laquelle les particules de résine acrylique sont obtenues par une polymérisation en émulsion de monomère(s) à insaturation $\alpha,\beta$-éthylénique et de monomère réticulant, à l'aide d'un émulsifiant.

3. Poudre selon la revendication 2, dans laquelle l'émulsifiant est un composé contenant un groupement ionisable amphotère.

4. Poudre selon l'une quelconque des revendications 1 à 3, dans laquelle la quantité desdites particules de polymère réticulé est de 0.1 à 10% en poids de la totalité de la matière solide de ladite poudre.

5. Poudre selon la revendication 4, dans laquelle la quantité desdites particules de polymère réticulé est de 0.1 à 5% en poids de la totalité de la matière solide de ladite poudre.

6. Poudre selon l'une quelconque des revendication 1 à 5, dans laquelle la résine liant est une résine acrylique contenant un groupement glycidyle et le durcisseur est un acide di-carboxylique.

7. Poudre selon l'une quelconque des revendication 1 à 5, dans laquelle la résine liant est une résine polyester contenant un groupement hydroxyle et le durcisseur est un composé polyisocyanate bloqué.

8. Poudre selon l'une quelconque des revendication 1 à 5, dans laquelle la résine liant est une résine acrylique contenant un groupement glycidyle et le durcisseur est une résine polyester contenant un groupement carboxylique.

9. Poudre selon l'une quelconque des revendications 1 à 5, dans laquelle la résine liant est une résine polyester contenant un groupement carboxylique et le durcisseur est une résine époxy.

10. Poudre selon l'une quelconque des revendication 1 à 5, dans laquelle la résine liant est une résine époxy et le durcisseur est une dicyandiamide.

11. Poudre selon l'une quelconque des revendications 1 à 5, dans laquelle la résine liant est une résine polyester contenant un groupement carboxylique et le durcisseur est un isocyanurate de triglycidyle.

12. Poudre selon l'une quelconque des revendication 1 à 5, dans laquelle la résine liant est une résine acrylique contenant un groupement glycidyle et le durcisseur est une association de résine polyester contenant un groupement carboxylique et un polyisocyanate bloqué.